# EUROPÄISCHE PATENTSCHRIFT

(11) **EP 0 871 810 B1**
(45) Veröffentlichungstag und Bekanntmachung des Hinweises auf die Patenterteilung: **18.12.2002**
(21) Anmeldenummer: 97912215.7
(22) Anmeldetag: 23.10.1997
(51) Int. Cl.: D06N 7/00

(54) **BAHNFÖRMIGES HALBZEUG, INSBESONDERE PUTZTAPETE, UND VERFAHREN ZU DESSEN HERSTELLUNG**
WEB-SHAPED SEMIFINISHED PRODUCT, IN PARTICULAR WALL COVERING PLASTER, AND PROCESS FOR PRODUCING THE SAME
PRODUIT SEMI-FINI EN FORME DE BANDE, NOTAMMENT BANDE DE CREPI, ET SON PROCEDE DE FABRICATION

(30) Priorität: 23.10.1996 DE 29618481 U; 25.03.1997 DE 29705272 U
(43) Veröffentlichungstag der Anmeldung: 21.10.1998
(73) Patentinhaber: Wedi, Stephan, 48282 Emsdetten (DE)
(72) Erfinder: Wedi, Stephan, 48282 Emsdetten (DE)
(74) Vertreter: Hoffmeister, Helmut, Dr. Dipl.-Phys.
(86) Internationale Anmeldenummer: EP9705864
(87) Internationale Veröffentlichungsnummer: WO98017855

(56) Entgegenhaltungen:
- DE-A- 2 818 740
- DE-A- 3 111 899
- DE-C- 4 234 269

## Beschreibung

Die Erfindung betrifft ein bahnförmiges Halbzeug, insbesondere eine Putztapete, und ein Verfahren zu dessen Herstellung. Hierbei wird ein flächenförmiges und wenigstens teilweise biegeelastisches Trägermaterial auf wenigstens einer Flachseite mit einer Beschichtungsmasse beschichtet, die nach dem Erstarren eine biegeelastische Schicht ausbildet.

Ein bahnförmiges Halbzeug der eingangs genannten Art ist aus der DE-A-3 111 899 bekannt. Auf einem Glasfaservlies mit einem Gewicht von 50 g/m² wird mit einer Dichtungsmasse von 150 g/m² beschichtet. Die Verdichtungsmasse dringt dabei wenigstens teilweise in den Vlies ein.

Die Verdichtungsmasse enthält
18 bis 20 % Di-isodecyl-Phtalat
0,5 bis 1 % Zn-Stabilisator
8 bis 10 % Äthylglykol
30 bis 35 % PVC-Pulver
20 bis 25.% Talcum.

Über diese Verdichtungsmasse wird eine Schaumkunststoffmasse von 200 g/m² aufgebracht und bei den üblichen Temperaturen aufgeschäumt. Die schaumkunststoffschicht kann mit einer Dekorationsstruktur versehen werden.

Die mineralischen Stoffe wie Talcum, Calciumcarbonat, Titanoxid sowie Beimischungen von UV-Absorbern und PV-Stabilisatoren sollen eine gewisse Witterungsbeständigkeit sichern. Die Elastizität der Verdichtungsmasse und der Kunststoffschicht wird allerdings durch Weichmacher erreicht. Weichmacher verschieben den thermoplastischen Bereich zu niederen Temperaturen. Um die Beständigkeit der Schaumkunststoffschicht zu wahren, müssen aber wandungsbeständige Weichmacher und die Weichmacheranteile selbst minimiert werden. Diese Beschichtung des Vlies ist aber kosten- und materialaufwendig. Außerdem wird das bahnförmige Halbzeug zu dick und zu schwer.

Aus der DE-B-1 150 941 ist eine Tapete mit einer Unterlage aus Schaumkunststoff und einer Deckfolie aus Papier oder Kunststoff bekannt. Zwischen der Unterlage und der Deckfolie liegt eine Schicht Schwerspat als Füllstoff.

Nachteilig ist, daß hierdurch eine zweischalige Wand entsteht, die zwar Körperschall hemmt, aber zu dick ist und ein zu hohes Gewicht hat. Durch ihre Dicke verliert die Tapete ihre Elastizität und läßt sich nicht nur schwer rollen, sondern auch schwer verarbeiten.

Eine Wandverkleidungsfolie oder -platte ist aus. der DE-U-7 931 745 U1 bekannt. Sie besteht aus einem extrudierten Polystyrolschaum mit einer Dicke zwischen 1 bis 3 mm und einer Breite bis zu 1200 mm bei einer Wandverkleidungsfolie und einer Dicke zwischen 2,5 und 6 mm im Format 800 x 1250 bis 800 x 2500 mm bei einer Wandverkleidungsplatte. Auf einer der Flachseiten ist eine einen Haftvermittler enthaltende Schicht angeordnet. Der Haftvermittler besteht aus verdünnten Dispersionsklebern, die auch zum Kleben der Folie oder Platte an der Wand eingesetzt werden. Da die Auftragsmenge zwischen 50 und 100 g pro m² liegt, muß zur Verhinderung der Entflammbarkeit ein flammhemmender Zusatz zugefügt werden.

Es ist außerdem eine gedämmte Außenwandplatte bekannt, die aus einer Dämmplatte besteht, die mit einer Putzschicht versehen ist, welche aus körnigen bzw. pulvrigen Isolierstoffen, einem mit einem Kunststoffilm überzogenen Glasfasergewebe und einem Zementbinder, der mit Kunststoffdispersion versetztem Wasser angemacht wurde, zusammengesetzt ist.

Nachteilig ist, daß die Außenwandplatte aufgrund ihrer hohen Festigkeit eine sehr hohe Steifigkeit besitzt.

Letztendlich ist aus der DE-C-4 234 269 eine Verbundplatte und ein Verfahren zu dessen Herstellung bekannt. Sie besteht aus einem Schaumstoffkern, bei dem wenigstens eine Flachseite mit einem aushärtenden Kunststoffmörtel, in den ein Glasfasergewebe eingebettet ist, beschichtet ist. Hergestellt wird die Verbundplatte, in dem auf eine aus dem Schaumstoff gebildeten Bahn Mörtel aufgebracht wird, in den eine endlose Bahn aus Glasfasergewebe eingedrückt wird. Überschüssiger Mörtel wird dann mit einem Abstreifer unter Bildung eines Mörtelschwalls abgestreift. Durch Abfühlen des Mörtelschwalls wird die Mörtelmenge gesteuert. Nach dem Zuschneiden der noch feuchten Mörtelschicht und der Armierung, gegebenenfalls auch der Schaumstoffkernbahn, erfolgt ein Trocknen und Aushärten der aufgebrachten Mörtelschicht.

Diese Verbundplatte und das Verfahren zu ihrer Herstellung haben sich bewährt. Dadurch, daß der Schaumstoffkern wenigstens 30 mm und die Mörtelschicht starr und über 0,5 mm dick ist, entsteht aber eine Platte, die selbst bei stärkster Dickenreduzierung so verwindungsfest ist, daß sie sich nur wie ein leichte, dünne Steinplatte verarbeiten läßt.

Der Erfindung die Aufgabe zugrunde, ein Halbzeug, nämlich eine Putztapete der eingangs genannten Art so weiter zu entwickeln, daß sie äußerlich wie ein aufgetragener Putz verhält, sich einfach herstellen und einfach be- und verarbeiten läßt. Ein weiterer Teil der der Erfindung zugrunde liegenden Aufgabe besteht darin, ein Verfahren anzugeben, mit dem sich das Halbzeug, insbesondere die Putztapete, einfach und kostengünstig herstellen läßt.

Erfindungsgemäß wird diese Aufgabe bei einem Halbzeug, insbesondere einer Putztapete, durch die Merkmale des Anspruchs 1 gelöst.

Die mit der Erfindung erzielten Vorteile bestehen insbesondere darin, daß auf dem flexiblen Glasfaservlies angeordnete elastische Weichmacherschicht(en) ein bahnförmiges Material entstehen läßt, das wie eine Papier-Tapete nicht nur gerollt, sondern auch auf Länge und Breite geschnitten und verklebt werden kann. Durch die Rollbarkeit ist es möglich, durchgehende glatte Bahnen zu verarbeiten, die bei einer zu beklebenden Wand vom Fußboden bis zur Decke reichen. Auch Decken lassen sich in ähnlicher Art und Weise abdecken. Das ist vor allem durch die biegeelastische, mineralgefüllte Weichkunststoffschicht möglich. Diese entsteht dadurch, daß die Beschichtungsmasse beim Trocknen nicht zu einem herkömmlichen starren Mörtel erstarrt, sondern abbindet. Die Beschichtungsmasse ist nämlich ein Gemisch aus mineralischen Stoffen und einer Kunststoffdispersion. Eine Kunststoffdispersion ist eine Sammelbezeichnung für Dispersionen von frei verteilten Kunststoffen in üblicher Weise wässrigen Dispersionsmitteln. Die Dispersion erfolgt dabei insbesondere in der flüssigen Phase. Nach dem Abbinden der Kunststoffdispersion werden dadurch die einzelnen Mineralien mit einer Schicht umgeben und durch Brücken untereinander verbunden. Hierdurch wird die Biegeelastizität der mineral gefüllten Weichkunststoffschicht realisiert und dadurch die beschriebenen vorteilhaften Eigenschaften wie Rollbarkeit, leichte Verarbeitbarkeit und dergleichen ermöglicht.

Die Breite einer solchen Putztapete entspricht der herkömmlicher Tapetenrollen und kann zwischen 400 und 1250 mm liegen. Bei einer Anwendung als Wandverkleidungstapete hat eine derartige Putztapete eine Tafelabmessung, die zwischen 300 mm x 300 mm bis zu 1250 mm x 2500 mm betragen kann. Die Einsatzgröße ist dabei abhängig vom jeweiligen Einsatzfall. Durch das Aufkleben der Putztapete in Rollen- oder Plattenform auf einer Wand oder einer Decke wird darüber hinaus eine zusätzliche Wärmeisolierung erreicht. Außerdem erhält die so beklebte Fläche eine sehr glatte Außenfläche, die gleichmäßig verputzt wirkt. Dieser "Putz" kann glatt oder mit Strukturen versehen sein. Die Strukturen erlauben es, den bei einem Verkleben nebeneinanderliegenden Bahnen entstehenden Stoß optisch verschwinden zu lassen. Im Mauerwerk bzw. Wand-Verbund vorhandene, ständig arbeitende Spalte können so wirkungsvoll überdeckt werden. Die Putztapete kann entsprechend dem konkreten Einsatzfall wasserdurch- oder wasserundurchlässig ausgebildet sein.

Das Trägermaterial ist ein Glasfaservlies.

Wesentlich für die Auswahl des Glasfaservlieses sind dessen Dicke und Durchlässigkeit. Insbesondere die Durchlässigkeit ist ein Maß für vorhandene Durchbrechungen im Flächengebilde. Erreicht werden können diese Durchbrechungen durch locker gewebte Glasfaservliese.

Glasfaservliese sind lockere Materialien aus Filamenten, die aus Glas-Fasern hergestellt sind, deren Zusammenhalt im allgemeinen durch die den Fasern eigene Haftung gewährleistet ist und durch deren Herstellung geben ist. Hierbei können die Einzelfasern eine Vorzugsrichtung aufweisen (orientierte oder Kreuzlage- Vliese) oder ungerichtet sein (Wirrvliese).

Diese Vliese können mechanisch verfestigt werden durch Vernadeln, Vermaschen oder durch Verwirbeln. Verfestigte Vliese entstehen auch durch Verkleben der Fasern mit flüssigen Bindemitteln (Acrylat-Polymere, SBR/NBR, Polyester- oder Polyurethan-Dispersionen) oder durch Verschmelzen bzw. Auflösen von sogenannten Bindefasern, die dem Vlies bei der Herstellung beigemischt wurden.

Bei der cohäsiven Verfestigung von Vliesen werden die Faseroberflächen durch geeignete Chemikalien angelöst und durch Druck verbunden oder bei erhöhter Temperatur verschweißt.

Die Rezeptur eines als Beschichtungsmasse verwendeten Mörtels ist wichtig. Die Flüssigkomponente des Kunstharz-Mörtels weist im wesentlichen zwei Komponenten auf. Die eine Komponente kann eine Elastizierkomponente sein, die 10 bis 45 Gew.-%, vorzugsweise 22 Gew.-% der gesamten Masse des Kunstharz-Mörtels einnimmt. Diese Elastizierkomponente enthält wenigstens 80 - 90 Gew.-% Dispersion eines Copolymers aus Butylacrylat und Styrol, vorzugsweise 57 %ig in Wasser, und 0,5 bis 2 % Paraffindispersion, vorzugsweise 30 %ig in Wasser, auf. Die zweite Komponente kann 3 bis 4 Gew.-%, vorzugsweise 3,7 Gew.-% Wasser am Gesamtgewicht des Kunstharz-Mörtels betragen. Die erste Elastizierkomponente macht nach Aushärten den Kunstharz-Mörtel elastisch und dehnbar. Hierdurch ist es möglich, die fertiggestellte Putztapete wie eine Papiertapete zu behandeln, indem sie aufgerollt, geschnitten, gezogen, verklebt oder gerissen wird. Die zweite Elastizierkomponente, die Wasser sein kann, macht den Kunstharz-Mörtel fließfähig, verhindert ein zu schnelles Abbinden und verbessert dadurch seine Verarbeitung. Der Anteil der zweiten Elastizierkomponente beträgt 1 bis 15 Gew.-%, vorzugsweise 3,7 Gew.-%.

Die Pulverkomponente des Kunstharz-Mörtels kann wie folgt zusammengesetzt sein:

| Volumenteile (in Vol.-%) | Komponente |
|---|---|
| 40 - 95 | hydraulisches Bindemittel, |
| 5 - 50 | latent hydraulisches Bindemittel, |
| 0 - 20 | Füllstoff, |
| 0,1 - 5 | Hydrophobiermittel |
| 0 - 10 | Silicat, |
| 0 - 10 | Dispersionspulver, |
| 0 - 5 | Verflüssiger, |
| 1 - 3 | Stabilisator. |

Diesen Komponenten kann hinzugefügt werden:

| Volumenteile (in Vol.-%) | Komponente |
|---|---|
| 0 - 5 | Reaktionsverzögerer, |
| 0 - 5 | Abbindebeschleuniger, |
| 0 - 3 | Verdickungsmittel, |
| 0 - 5 | Schaumbinder. |

Die angegebenen Zusammensetzungen ermöglichen es, daß der Kunstharz-Mörtel der Putztapete die verarbeitungstechnischen Eigenschaften und ihr spezielles Aussehen gibt.

Dispersionspulver, Verflüssiger und Stabilisator bilden als Kunststoff ein Vinylacetat aus.

Außerdem kann entweder gleich der Pulverkomponente oder aber später dem angerührten Kunstharz-Mörtel ein Farbzusatz beigemischt werden. Der Farbzusatz kann eine helle Farbe, insbesondere eine weiße Farbe herkömmlicher Zusammensetzung sein. Mit dem Beimischen von Farben kann die Mörtelschicht entsprechend eingefärbt werden. Da Zement in der Regel ein dunkelgraues Aussehen nach dem Aushärten hat, ist durch Beigabe weißer Farbe bzw. weißer Farbpigmente die Mörtelschicht aufhellbar, und zwar so weit, daß sie entweder weiß oder fast weiß erscheint. Die Farbzusätze können dabei die mineralischen Stoffen bzw. die Kunststoffanteile des Gemisches ergänzen und/oder verbessern. Härtet ein derartig eingefärbter Kunstharz-Mörtel aus, braucht bei einer Farbgebung nur ein Farbauftrag aufgetragen werden. Darüber hinaus läßt die helle, bis ins weiße hineingehende Mörtelschicht die aufgetragene Farbe kräftiger leuchten und zur Geltung kommen.

In eine der Mörtelschichten kann zusätzlich ein Armierungsgewebe eingebettet sein. Hierbei handelt es sich um ein sehr feinfaseriges und dünnes Gewebe. Durch ein solches Beschichten läßt sich die Außenflächen ähnlich wie die Verbundplatten be- und verarbeiten. So wird ein Verputzen, ein Bekleben mit Tapete oder ein Verfliesen erleichtert.

In oder auf einer der Mörtelschichten können ein oder mehrere Wärmeübertragungsträger eingebracht sein. Diese Wärmeübertragungsträger können Heizdrähte sein, die auf eine der Außenflächen aufgelegt und dann in die Mörtelschicht eingebettet werden.

Der Kunstharz-Mörtel kann im Spritz- oder Anstrichverfahren auf eine der Flachseiten aufgebracht sein. Durch das Aufspritzen oder Aufstreichen ist ein sehr dünnes Auftragen möglich, so daß angestrebte Schichtdicken von 0,01 mm bis 0,1 mm erreicht werden können. Auch ein Aufrollen oder Aufpinseln des Zweikomponenten-Mörtels ist möglich. Welches Auftragungsverfahren zum Einsatz kommt, hängt von der jeweiligen angestrebten sehr dünnen Mörtelschicht-Dicke ab.

Der weitere Teil der Autgabe wird durch ein Verfahren mit folgenden Schritten gelöst:
A) Führen des flächenförmigen und wenigstens teilweise biegeelastischen Glasfaservlieses mit einer Vortriebsgeschwindigkeit zwischen 1 und 15 m/min über eine umlaufende Flächeneinrichtung,
B) Aufbringen einer mineralgefüllten Kunststoffdispersion auf eine der Flachseiten des Trägermaterials aus einem Misch- und Vorratsbehälter mit einem Ausbreitungsmaß zwischen 100 und 350 mm,
C) Abstreifen der mineralgefüllten Kunststoffdispersion mit einer Abstreifeinrichtung zu einer Schicht,
D) Führen des wenigstens einseitig beschichteten Trägermaterials mit der Vorlaufgeschwindigkeit zwischen 1 und 15 m/min über eine luftdurchlässige Stabtransportkette durch eine Trockungszone und Abbinden der mineralgefüllten Kunststoffdispersion,
E) Speichern des fertiggestellten bahnfönnigen Halbzeuges mit einer Speichereinrichtung.

Die hiermit erzielten Vorteile bestehen insbesondere darin, daß eine kontinuierliche und einfache Herstellung des bahnförmigen Halbzeugs, nämlich der Putztapete, möglich ist. Wesentlich ist dabei, daß die mineralgefüllte Kunststoffdispersion mit einem Ausbreitungsmaß zwischen 10 und 350 mm aufgebracht wird. Das Ausbreitungsmaß wird in der Bauindustrie zur Bestimmung der Fließfähigkeit bzw. Viskosität aufzutragenden Mörtels eingesetzt. Maurermörtel hat z. B. ein Ausbreitungsmaß, das unter 120 mm liegt. Kommen als Trägermaterial Vliese mit einer Luftdurchlässigkeit von 4 bis 6000 l/m²·s, vorzugsweise 5000 l/m²·s zum Einsatz, wurde für einen Kunstharz-Mörtel mit einer Elastizitätskomponente als mineralgefüllte Kunststoffdispersion überraschenderweise ein Ausbreitungsmaß zwischen 160 und 210 mm gefunden. Ein Kunstharz-Mörtel mit einem derartigen Ausbreitungsmaß ist in der Lage, sich zum einen leichter flächenartig auf der Flachseite des Vlieses auszubreiten und darüber hinaus in die Vliesporen gezielt einzudringen. Verbunden mit der gefundenen Vorwärtsbewegung des Trägermaterials mit einer Vorlaufgeschwindigkeit von 1 bis 15 mm, vorzugsweise 5 m/min, ist es möglich, die Eindringtiefe und die Durchdringung des Kunstharz-Mörtels zu steuern. Überflüssiger Mörtel wird dann mit dem Abstreifer bis zu einer gewünschten Höhe abgestrichen, so daß die Dicke der Mörtelschicht genau bestimmt werden kann. Das Abbinden erfolgt mit der gleichen Vorlaufgeschwindigkeit wie das Beschichten. Hierdurch wird ein gleichmäßiges Vorwärtsbewegen des Trägermaterials gewährleistet. Die Menge der aufzubringenden Trocknungsenergie bzw. die Länge der Trocknungsstrecke ermöglichen eine gezielte Trocknung und dadurch eine industrielle Fertigung. Die luftdurchlässige Transportkette sichert eine Rundum-Trocknung und damit schnelle und vollständige Abbindung des Gemisches. Das Speichern des fertiggestellten bahnförmigen Halbzeuges, nämlich der Tapete in der Speichereinrichtung ist eine erste Vorbereitungsphase für einen späteren Versand des fertigen Halbzeuges. Wesentlich ist, daß durch die teilweise Verwendung und Weiterentwicklung des aus der DE-A-4 239 269 bekannten Verfahrens ein Verfahren mit einer neuen Qualität entstanden ist. Wesentliche Schritte dieses Verfahrens ermöglichen es, gezielt das Endprodukt Putztapete herzustellen.

Im Verfahrensschritt B) kann das Ausbreitungsmaß ständig oder in bestimmten Abständen, z. B. 10 Minuten, einer Stunde oder drei Stunden überwacht werden. Es kann dann als Meßgröße für eine Mengenregulierung einer Flüssigkeitskomponente, die dem Misch- und Vorratsbehälter zugeführt wird, genutzt werden, so daß das Ausbreitungsmaß immer in festgelegten Grenzen gehalten wird. Durch diese Maßnahme wird eine gleichbleibende Qualität der Putztapete und deren Oberfläche gewährleistet.

Im gleichen Schritt kann dem Gemisch der mineralgefüllten Kunststoffdispersion ein Farbstoff beigemischt werden. Dieser Farbstoff verteilt sich und löst sich zugleich beim Herstellen der Mischung in diesem Verfahrensschritt vorteilhafterweise auf.

Im nachfolgenden Verfahrensschritt C) kann der sich aufstauende Mineral-Kunststoffdispersionsschwall mit einem Sensor abgefühlt und als Maß dessen Höhe für eine Regulierung der Zufuhrmenge des Gemisches genutzt werden. Hierdurch wird ein Aushärten des Mörtelschwalls während der Aufbringungsphase verhindert und damit die Qualität der Tapete gesichert.

Das Signal, das bei der Aufnahme der Höhe des Mörtelschwalls aufgenommen und das Signal, das bei der Feststellung des Ausbreitungsmaßes des Gemisches festgestellt wird, können einer Steuereinrichtung zugeführt werden. Diese Steuereinrichtung kann rechnergestützt sein. Mit Hilfe dieser Maße kann die Regulierung der Flüssigkeitszufuhr und der Zuführungsmenge des Gemisches gesteuert werden.

Durch das Abstreifen überschüssigen Mörtels erhält zugleich die noch feuchte Schicht eine Strukturierung. Die Struktur kann dabei von der Struktur des Abstreifers verändert werden. In der Regel sorgt der Abstreifer für eine plane und flächige Ausbildung der noch feuchten Schicht. Nach diesem Schritt C) und vor dem Schritt D) kann die noch feuchte Schicht aber noch ganz gezielt mit einer Struktureinrichtung zu einer Strukturschicht umgestaltet werden. Hierdurch können Strukturen geschaffen werden, die Putzstrukturen, Tapetenstrukturen und dergleichen ähnlich sind.

Im Schritt D) wird die mineralgefüllte Weichkunststoffschicht durch ein Bestrahlen mit Infrarotstrahlen gebunden. Es wurde überraschenderweise gefunden, daß diese Strahlung sich besonders dazu eignet, den AbbindungsprozeB nach der Beschichtung zu beschleunigen. Das Gemisch bindet durch die Infrarot-Bestrahlung so schnell und so gut ab, daß es bereits nach 5 bis 25 Minuten druckfest ist.

Im gleichen Verfahrensschritt kann der Bindungsprozeß der mineralgefüllten Kunststoffdispersion noch durch ein Bespülen mit Unterluft unterstützt werden. Dies wird so realisiert, daß die nicht aktiv beschichtete Flachseite mit Warmluft bespült wird. Es ist nicht ausgeschlossen, daß zum noch weiteren Beschleunigen des Bindungsprozesses auch hier unterstützend Infrarotstrahlen eingesetzt werden. Von Vorteil ist es, wenn das beschichtete Trägermaterial sowohl von oben als auch von unten durch Infrarot- und/oder Warmluft getrocknet wird, um den Bindungsprozeß gezielt voranzutreiben.

Im Verfahrensschritt E) kann das bahnförmige Halbzeug entweder aufgerollt oder nach einem Schneiden auf Länge gestapelt werden. Welche Form der Speicherung des fertiggestellten Produktes gewählt wird, hängt von den jeweiligen Versand- und Verarbeitungsbedingungen ab.

Wesentlich ist aber, daß in diesem Verfahrensschritt wenigstens durch das Aufrollen des bahnförmigen Halbzeugs das Trägermaterial und auch das einseitig beschichtete Trägermaterial geführt und hierüber die Vorlaufgeschwindigkeit eingestellt und geregelt werden kann. Dadurch, daß durch das Aufrollen des fertigen Produktes das ungeschnittene Trägermaterial praktisch gezogen wird, läßt sich die Vorlaufgeschwindigkeit ganz gezielt einstellen.

Ein Ausführungsbeispiel der Erfindung ist in der Zeichnung dargestellt und wird im folgenden näher beschrieben.

Es zeigen
- Fig. 1: eine mit einer Vliesbahn hergestellte Putztapete in einer schematischen Teildarstellung,
- Fig. 2a: einen Teilschnitt durch eine Putztapete gemäß Fig. 1 entlang der Linie IIA - IIA,
- Fig. 2b: einen vergrößerten Ausschnitt IIB aus einer Putztapete gemäß Fig. 2a,
- Fig. 3: eine Vorrichtung zur Durchführung des Verfahrens zur Herstellung einer Putztapete gemäß den Fig. 1 bis 2b in einer schematischen Seitenansicht,
- Fig. 4: eine Vorrichtung gemäß Fig. 3 in einer schematischen Draufsicht,
- Fig. 5a und 5b: Meßmittel zur Feststellung des Ausbreitungsmaßes eines Mörtelgemisches gemäß DIN 1045 und
- Fig. 6: eine mit einer Isoliertapete wenigstens teilweise beklebte Wand eines Raumes in einer schematischen, perspektivischen Teildarstellung.

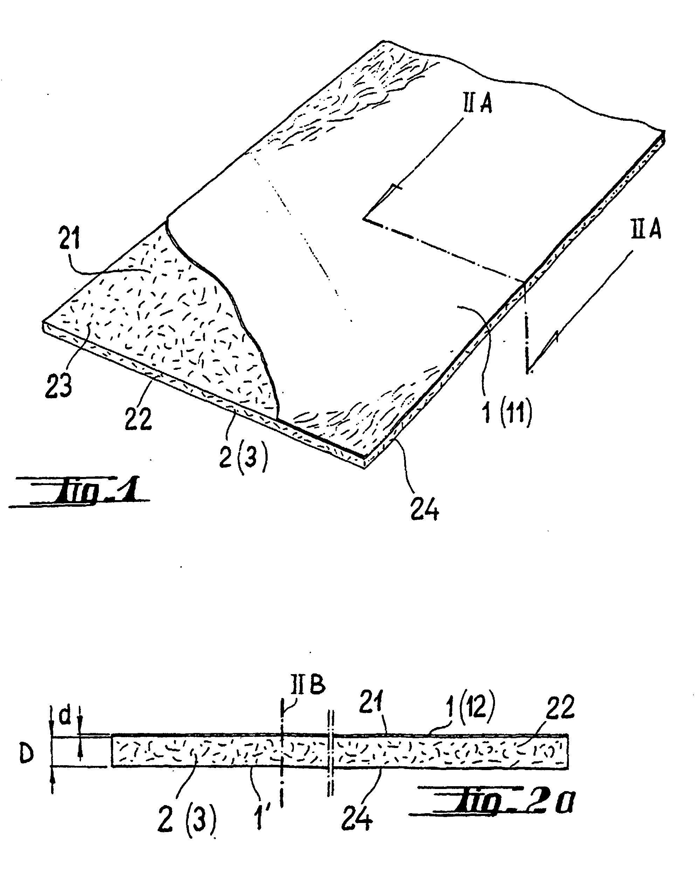

Eine Vliesbahn 2 für eine Putztapete 100, 101 ist in Fig. 1 dargestellt. In Fig. 1 sind mit 22 die Vliesporen und mit 23 die Vliesfasern bezeichnet.

Überraschenderweise wurde gefunden, daß sich eine Vliesbahn 2 aus Spinnvliesstoff mit folgenden technischen Daten am vorteilhaftesten zur Herstellung einer Putztapete 100, 101 einsetzen läßt.

| | |
|---|---|
| Masse je Flächeneinheit: | 57 < 64 < 70 g/m². |
| Bindeanteil | ca. 30 % |
| Dicke: | ca. 0,20 m |
| Zugfestigkeit längs: | 190 < 200 N/5 cm |
| quer: | 130 < 140 N/5 cm |
| Glasart: | B-Glas |
| Paserdurchmesser: | 13,5 µ |
| Faserlänge: | 18 mm |
| Luftdurchlässigkeit: | 5000 l/m²·s |

Die Vliesbahn 2 kann eine Rollenlänge von etwa 2500 m und einen Rollendurchmesser von etwa 77 cm haben.

Von besonderer Bedeutung für die weitere Verarbeitung der ausgewählten Vliesbahn 2 ist deren Gewicht pro Flächeneinheit oder aber auch deren Titer sowie deren Luftdurchlässigkeit. In der Textilindustrie bedeutet Titer eine Feinheitsbezeichnung für Fasern und Fäden, d. h. eine Gewichtsangabe pro Länge, deren Einheit das Tex ist. Anstelle des angegebenen Bereichs für das Flächengewicht kann auch ein Titer zwischen 1 Dtex und 10 Dtex, vorzugsweise dzwischen 4 Dtex und 6 Dtex eingesetzt werden. Bei der Angabe des Toleranzbereichs in beiden Bemessungsangaben g/m² bzw. Dtex gilt umgerechnet jeweils der niedrigste und der oberste Wert für die Festlegung des gesamten Toleranzbereiches.

Die Luftdurchlässigkeit ist ein Maß für die Porösität der Vliesbahn 2. Dabei reichen die Vliesporen 22 von deren Flachseite 21 bis zu deren gegenüberliegenden Flachseite 24.

Auf die so beschriebene Vliesbahn 2 wird ein Kunstharz-Mörtel 11 aufgebracht.

Der Kunstharz-Mörtel 11 setzt sich wie folgt zusammen:
A)
1000 g (entspricht = 74,1 Gew.-%) Pulverkomponente aus feinstkörnigem Zement, Additiven und Zuschlägen.
Die Pulverkomponente setzt sich im einzelnen wie folgt zusammen:

| Volumenteile (in Vol.-%) | Komponente |
|---|---|
| 40 - 95 | hydraulisches Bindemittel, |
| 5 - 50 | latent hydraulisches Bindemittel, |
| 0 - 20 | Füllstoff, |
| 0,1 - 5 | Hydrophobiermittel |
| 0 - 10 | Silicat, |
| 0 - 10 | Dispersionspulver, |
| 0 - 5 | Verflüssiger, |
| 0 - 3 | Stabilisator. |

Diesen Komponenten kann hinzugefügt werden:

| | |
|---|---|
| 0 - 5 | Reaktionsverzögerer, |
| 0 - 5 | Abbindebeschleuniger, |
| 0 - 3 | Verdickungsmittel, |
| 0 - 5 | Schaumbinder. |

B) 300 g (entspricht 22,2 Gew.-%) Elastizierkomponente.
Ihre Rezeptur enthält insbesondere
80 - 90 Gew.-% Dispersion eines Copolymers aus Butylacrylat mit Styrol, ca. 57 %ig in Wasser,
0,8 - 2 % Parafindispersion, ca. 30 %ig in Wasser
Elastizitierkomponenten ähnlicher Zusammensetzung sind bekannt. Mit ihnen können Zement-, Kalk- und Gipsprodukte elastifiziert und dehnbar gemacht werden. Wesentlich ist, daß die speziell genannte Elastizierkomponente wirkungsvoller als die bekannten sind und ihre Zumischung von 300 g zu 1000 g Pulverkomponente die Be- und Verarbeitungseigenschaften des Kunstharz-Mörtels 11 und die mit ihm hergestellte Putztapete 100, 101 positiv beeinflußt.
C) 50 g (entspricht 3,7 Gew.-%) Wasser.
Die Zumischung von Wasser in dieser Menge verbessert die Verarbeitungseigenschaften des aus den Komponenten A) und B) hergestellten Gemisches. Dem Gemisch kann eine Farbe zugesetzt werden. Die Farbe kann frei gewählt werden. Zur Aufhellung des sehr dunklen Mörtels wird aber vorteilhafterweiße weiße Farbe zugesetzt, so daß der Kunstharz-Mörtel 11 weiß bis fast weiß erscheint. Ein Maß für die Verarbeitungseigenschaften des Gemisches ist das Ausbreitungsmaß A, auf das an anderer Stelle im Detail eingeganen wird.

Die gemachten Angaben müssen entsprechend fachmännischen Erfahrung eingehalten werden. Die speziell beschriebene Mischung bezieht sich auf die bereits im Detail beschriebene Vliesbahn 2 mit ihren besonderen technischen Daten.

Ist der Kunstharz-Mörtel in der beschriebenen Zusammensetzung gut durchgemischt, wird er auf die Vliesbahn 2 aufgetragen. Da die Vliesbahn Teil einer aufgerollten 2500 m-Bahn ist, ist ein kontinuierliches Auftragen der so langen Vliesbahn 2 mit dem Kunstharz-Mörtel 11 möglich.

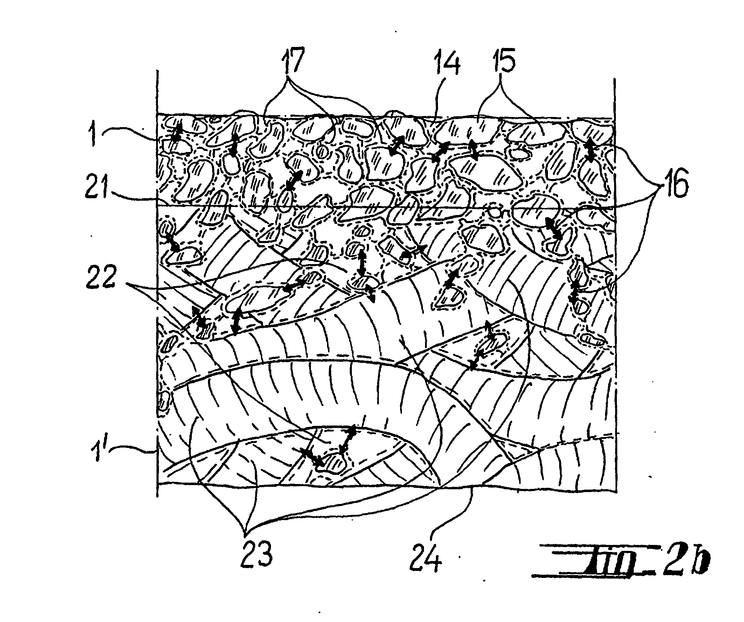

Bedingt durch die technischen Daten der Vliesbahn 2 und der Fließfähigkeit des Kunstharzmörtels 11 in der beschriebenen Zusammensetzung wurde überraschenderweise gefunden, daß bei einem Auftragen des Kunstharz-Mörtels 11 auf der Flachseite 21 nicht nur diese, sondern auch die gegenüberliegende Flachseite 24 beschichtet werden kann. Beim Beschichten der Flachseite 21 mit dem Kunstharz-Mörtel 11 in der beschriebenen Art und Weise dringt dieser nämlich durch die Vliesporen 22 hindurch und umgibt die Vliesfasern 23 wenigstens teilweise, wie die Fig. 2b deutlich macht.

Die Menge des aufgetragenen Kunstharz-Mörtels 11 auf der Flachseite 21 wird bei einem kontinuierlichen Verfahren durch die Geschwindigkeit und die zur Verfügung gestellte Menge des Mörtels bestimmt. Im gleichen Maße erfolgt die Durchsetzung der Vliesporen 22 und die Ausbildung der der Flachseite 21 gegenüberliegenden Flachseite 24. Die Stärke der Beschichtung kann durch ein mehrmaliges Auftragen bestimmt werden. Die Art und Weise des Auftragens ermöglicht zugleich die Erzeugung von Oberflächenstrukturen, die ein Verarbeiten der Putztapeten 100, 101 verbessern, da hierdurch der Stoß beim Kleben optisch so gut wie nicht mehr sichtbar ist.

Das Auftragen des Kunstharz-Mörtels 11 auf nur einer Flachseite 21 hat zur Folge, daß durch den "Filtereffekt" der Vliesbahn 2 im wesentlichen die grobkörnigen Anteile des Kunstharz-Mörtels 11 auf dieser verbleiben, währenddessen die feineren und insbesondere die Kunstharzanteile des Kunstharz-Mörtels 11 auf die Gegenseite gelangen. Die Feinheit der Vliesporen 22 und die Siebkörnung der Pulverkomponenten, insbesondere des Zements und der Kieskörnung bestimmen, welche festen Anteile auf die gegenüberliegende Flachseite 21 gelangen können. Die anteilige Menge Wasser an dem verarbeiteten Dreikomponenten-Kunstharz-Mörtel 11 erhöht dessen Streichfähigkeit und erlaubt eine Glättung der Beschichtung auf der Flachseite 21 und der Flachseite 24.

Trocknet der Kunstharz-Mörtel 11 aus, bildet er auf der Flachseite 21 eine biegeelastische Mörtelschicht 1 und wenigstens in den Vliesporen 22 eine biegeelastische Mörteltränkschicht 3 und kann auf der Flachseite 24 eine biegeelastische Mörtelschicht 1'. Die Mörteltränkschicht 3 stellt über die gesamte Putztapete 100, 101 verteilte "Zapfen" dar, die mit der Mörtelschicht verbunden oder die die biegeelastischen Mörtelschichten 1 und 1' miteinander verbinden. Anders ausgedrückt, wird die Vliesbahn 2 wenigstens teilweise von dem ausgehärteten Kunstharz-Mörtel 11 umschlossen bzw. getränkt.

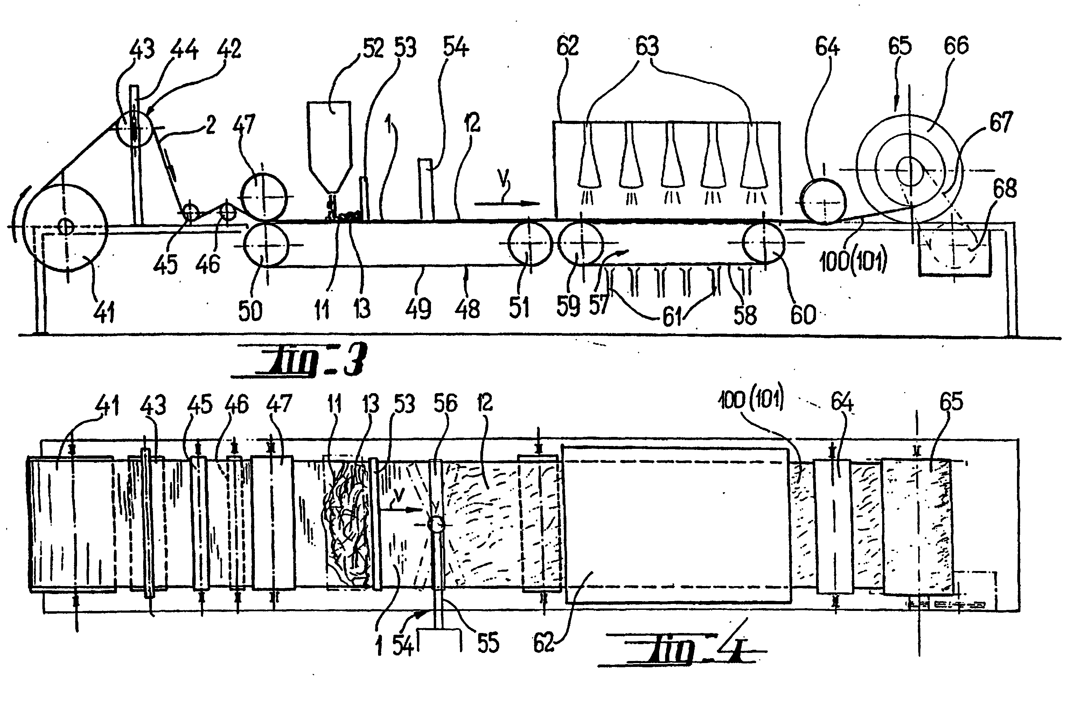

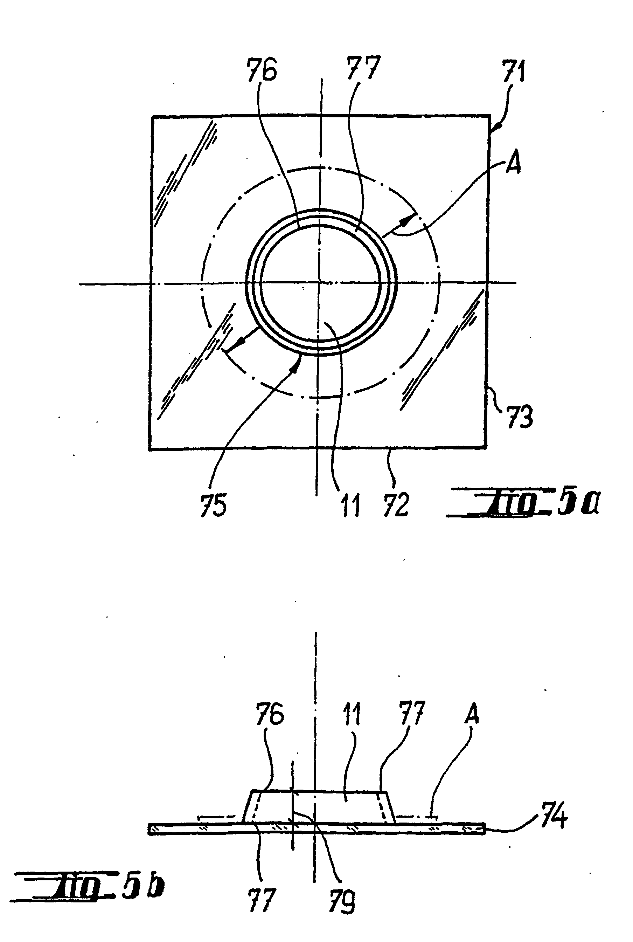

In den Fig. 3 und 4 ist eine Vorrichtung zur Herstellung der Putztapete 100, 101 dargestellt.

Am Anfang der Vorrichtung wird eine Vliesrolle 41 aufgesteckt und die Vliesbahn 2 über eine Gewebesteuereinrichtung 42 geführt. Die Gewebesteuereinrichtung 42 ist eine Achsenschwenkwalze 43, die in einer Gerüsteinheit 44 gehalten ist. Wesentlich ist, daß die Achsenschwenkrolle 43 um ihre Achsenlängsrichtung frei beweglich ist. Hierdurch wird gesichert, daß die Vliesbahn 2 parallel zu einer umlaufenden Plächeneinrichtung 48 geführt wird. Vorher wird aber die Vliesbahn 2 über Leitrollen 45, 46 geführt und mit Hilfe einer Andrückrolleneinrichtung, im weiteren Andrückrolle 47 genannt, auf die umlaufende Flächeneinrichtung 48 aufgelegt wird.

Die umlaufende Flächeneinrichtung 48 ist ein umlaufendes flüssigkeitsdichtes Förderband 49, das über Umlenkrollen 50, 51 geführt wird. Eine der Umlenkrollen 50, 51 ist eine Antriebsrolle. Während sich die Vliesbahn 2 mit einer Vortriebsgeschwindigkeit v zwischen 1 und 15 m/min, vorzugsweise 5 m/min vorwärts bewegt, läuft das flüssigkeitsdichte Förderband 49 mit der gleichen Geschwindigkeit um, so daß das Förderband 49 gegenüber der Vliesbahn 2 eine mitlaufende ebene Fläche ist.

Auf die Vliesbahn 2 wird aus einem Misch- und Vorratsbehälter, im folgenden Mörtelbehälter 52 genannt, der Kunstharz-Mörtel 11 auf die Vliesbahn 2 aufgetragen. Mit Hilfe einer Abstreifeinrichtung, im folgenden Mörtelabstreifer 53 genannt, wird überschüssiger Mörtel abgezogen und so die mittlere Dicke der späteren biegeelastischen Mörtelschicht 1 eingestellt. Bei diesem Abstreifvorgang bildet sich vor dem Mörtelabstreifer 53 ein Mörtelschwall 13, der mit Hilfe eines Sensors gemessen wird und als Steuergröße für die einzustellende Menge des Kunstharz-Mörtels 11 dient.

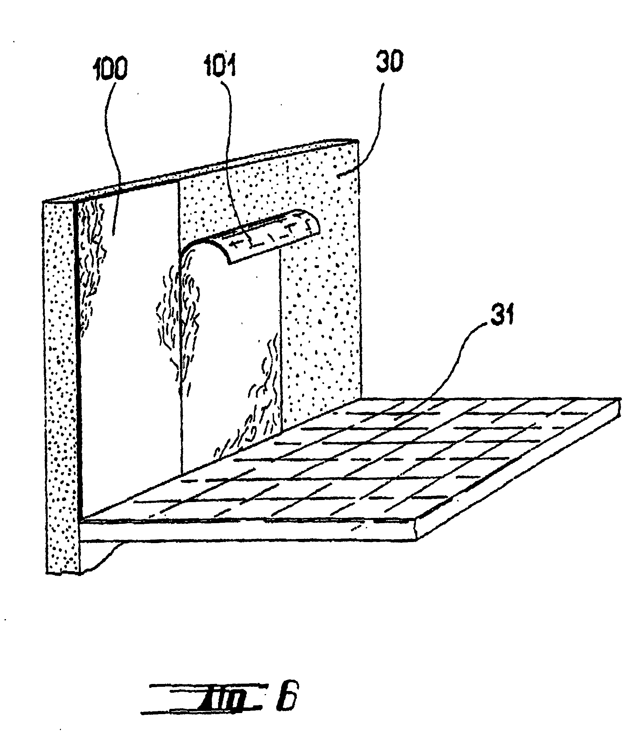

Gemessen wird aber nicht nur der sich ergebende Mörtelschwall 13 des Kunstharz-Mörtels 11, sondern auch sein Ausbreitungsmaß A. Das Ausbreitungsmaß A wird nach DIN 1045 mit in den Fig. 5a und 5b dargestellten Meßmitteln gemessen. Diese sind eine Glasplatte 71 und ein Vickertring 75. Die Glasplatte 71 hat eine Kantenlänge 72 und 73 von jeweils 300 mm und eine Plattendicke 74 von 5 mm. Der Vickertring 75 als Prüfgerät ist ein konisch verlaufender Kegelhohlstumpf mit einem oberen Innendurchmesser 76 von 70 mm und einem unteren Innendurchmesser 77 von 80 mm. Der Vickertring 75 hat eine Ringdicke 78 von 2,5 mm und eine Ringhöhe 79 von 40 mm.

Zur Feststellung des Ausbreitungsmaßes A wird der Vickertring 75 in der Mitte der Glasplatte 71 positioniert. AnschlieBend wird der aus dem Mörtelbehälter 52 kommende Kunstharz-Mörtel 11 so weit eingegeben, daß der Vickertring 75 bündig befüllt ist. Danach wird der Vickertring angehoben, so daß die Menge des eingefüllten Kunstharz-Mörtels 11 sich auf der glatten Glasscheibe verteilen kann. Als Ausbreitungsmaß A wurde für den Kunstharzmörtel 11 als Kleinstmaß 150 bis 180, vorzugsweise 170 bei einer Höhe von 5 bis 10, vorzugsweise 6 bis 8 mm und ein Größtmaß für das AusbreitungsmaB A ein Durchmesser von 190 bis 215, vorzugsweise 205 mit einer Höhe von 2 bis 7 mm, vorzugsweise 4 bis 6 mm gemessen. Das Kleinst- und das Größtmaß des Ausbreitungsmaßes A zeigen, daß ein sehr dünnflüssiger Kunstharz-Mörtel 11 sich sehr weit ausbreitet und bereits eine entsprechende Dicke ausbildet. Dieses Maß kann durch eine Regulierung der Flüssigkeitskomponente, insbesondere der zugeführten Wassermenge, eingestellt werden. Der Mörtelbehälter 52 ist nicht nur ein einfacher Sammelbehälter, sondern er dient zugleich dem Zubereiten des Gemisches und dessen Bevorratung. Bei diesem Mischvorgang wird zugleich eine festzulegende Menge Farbe zugegeben, die dann gut durchmischt die gewünschte Farbe des Mörtels 11 ergibt. Auch das Ausbreitungsmaß A kann der bereits beschriebenen Steuereinrichtung eingegeben werden, die die Flüssigkeitszufuhr automatisch regelt, so daß ein kontinuierlicher, industrieller Prozeß gewährleistet wird. Das Ausbreitungsmaß ist allerdings so zu wählen, daß der Kunstharz-Mörtel 11 vor Erreichen einer Struktureinrichtung eine gewisse Festigkeit erlangt, so daß eingebrachte Strukturen in die noch feuchte Schicht erhalten bleiben. Die Struktureinrichtung kann als Roboter ausgebildet sein, der mit Hilfe eines Armauslegers 55 eine Strukturrakel 56 entsprechend bewegt und so ein Muster, z. B. nebeneinanderlaufende Teilkreise, in die noch feuchte Schicht eingibt, so daß eine Mörtel-Struktur-Schicht 12 entsteht.

Beim Auftragen des Kunstharz-Mörtels 11 und beim abschliessenden Abstreifen diffundiert der Kunstharz-Mörtel 11 in die Vliesporen 22 der Vliesbahn 2. Die Vortriebsgeschwindigkeit 2, die Aushärtezeit und das Ausbreitungsmaß A bestimmen, ob der Kunstharz-Mörtel 11, zumindest kleine Sand- und Mörtelkörner geringer Siebgröße sowie der Kunststoffanteil auf die gegenüberliegende Flachseite 24 gelangen.

Diese so beschichtete und "getränkte" Vliesbahn 2 gelangt in einen Trockenofen 62. Im Trockenofen 62 wird sie über eine luftdurchlässige und umlaufende Rosteinrichtung 57 geführt. Die Rosteinrichtung 57 ist als Stabtransportkette 58 ausgebildet, die über Umlenkrollen 59, 60 geführt wird. Die Stabtransportkette ist so ausgebildet, daß von zwei sich gegenüberliegenden Ketten Stäbe gehalten werden, auf die dann die beschichtete Vliesbahn 2 sich auflegen kann. Auch im Trockenofen 42 wird die beschichtete und getränkte Vliesbahn 2 mit der gleichen Vortriebsgeschwindigkeit v geführt, wie beim Beschichten. Synchron zu dieser Vortriebsgeschwindigkeit v läuft die umlaufende Stabtransportkette 58.

Im Trockenofen 52 sind Trockenstrahler 63 angeordnet. Erfindungswesentlich ist, daß diese als Infrarotstrahler ausgebildet sind. Die Infrarotstrahlen führen zu einer schnelleren Bindung des Kunststoffteils des Kunstharzmörtels 11. Zur Unterstützung des Abbindevorgangs sind unterhalb der Stabtransportkette 58 Unterbodentrockner 61 angeordnet. Diese sind vorteilhafterweise Warmluftduschen. Sie können aber darüber hinaus auch durch Infrarotstrahler unterstützt werden. Die Länge des Trockenofens 62 bestimmt sich nach der aufzuwendenden Trockenzeit.

Verläßt die beschichte Vliesbahn 2 den Trockenofen 63, ist die Putztapete 100, 101 fertiggestellt.

Nach dem Abbinden befindet sich, wie insbesondere Fig. 2b zeigt, auf der Flachseite 21 die biegeelastische Schicht 1, in den Vliesporen 22 die Mörteltränkschicht 3 und an der gegenüberliegenden Flachseite 24 soweit gewünscht die biegeelastische Mörtelschicht 1' aus. Beim Auftragen des Kunstharz-Mörtels 11 werden Kunststoffdispersion 14 und Mineralkörper 15 in der beschriebenen Art und Weise verteilt. Beim Abbinden des Gemisches werden die Mineralkörper 15 mit einer Klebehülle 17 umgeben und mit Hilfe von Klebebrücken 16 verbunden. Dadurch werden die einzelnen Mineralkörper 15 "gelenkig" miteinander verknüpft. Umhüllt und verknüpft untereinander und mit den Mineralkörpern 15 werden darüber hinaus mit 23 bezeichnete Vliesfasern 23. Hierdurch entstehen die besonderen Eigenschaften wie Biegeelastizität und gute Verarbeitungsfähigkeit der Putztapete 100, 101.

Die fertiggestellte Putztapete 100, 101 wird mit Hilfe einer Zug- und Wickeleinrichtung 65 aufgewickelt. Die Zug- und Wickeleinrichtung 65 besteht aus einer Wickeltrommel 67 mit eine Innendurchmesser, der so groß ist, daß die Putztapete 100, 101 beim Aufwickeln nicht geknickt oder deformiert wird. Die Wickeltrommel 67 wird durch einen Trommelantrieb 68 angetrieben. Hierbei handelt es sich um einen drehzahlgeregelten Motor, der über eine entsprechende Über- bzw. Untersetzung die Winkeltrommel 67 in Rotation versetzt. Wesentlich ist, daß der Aufwickelvorgang der Putztapete 100, 101 zu einer Tapetenrolle 66 gleichzeitig zum Führen der Vliesbahn mit einer bestimmten Vortriebsgeschwindigkeit v benutzt wird. Der regelbare Trommelantrieb 68 sichert dabei, daß bei einem größer werdenden Durchmesser der Tapetenrolle 66 die Vortriebsgeschwindigkeit v konstant bleibt. Um eine kontinuierliche Fertigung zu gewährleisten, wird das Aufwickeln der Putztapete zu einer Tapetenrolle 66 "fliegend" vorgenommen, indem eine volle Wickeltrommel 67 sofort durch eine leere ersetzt wird. Das wird durch Führungs- und Lenkungsmechanismen durchgeführt. Hierbei wird die Putztapete 100, 101 durch ein weiteres Antriebsaggregat weiter mit der eingestellten Vortriebsgeschwindigkeit v weiterbefördert und sofort wieder aufgewickelt. Damit die Vliesbahn 2 auch beim Aufwickeln der Putztapete 100, 101 immer in der gleichen Bearbeitungsposition verbleibt, ist eine Umlenkrolle 64 vorgesehen. Die Umlenkrolle 64 kann durch eine Höhenverstellbarkeit entweder der gesamten Zug-Wickeleinrichtung 64 oder der Wickeltrommel 67 realisiert werden.

Die Putztapete 100, 101 auf der Tapetenrolle 66 ist nach dem Fertigungs- und Trocknungsvorgang zwar insoweit "trocken", daß sie sich selbst beim Aufwickelvorgang nicht weiter verformt. Vor einer weiteren Verarbeitung ist es aber vorteilhaft, die Tapetenrolle 66 bis zum Abschluß der gesamten chemischen Reaktion noch stehen zu lassen.

Die Verarbeitung der Putztapete 100, 101 ist in Fig. 6 dargestellt.
In Fig. 6 ist ein Raum gezeigt, der eine mit Fliesen belegten Fußboden 31 und eine Wand 30 aufweist. Die Wand 30 ist eine Fertigbetonplatte, wie sie bei den in den neuen Bundesländern vorhandenen Plattenbauten zum Einsatz kam. Sie ist dadurch gekennzeichnet, daß sie über eine Vielzahl von Vertiefungen auf der sonst an sich glatten Oberfläche verfügt. Hierdurch wird ein Tapezieren wesentlich erschwert. Darüber hinaus kann sich in den Vertiefungen Tapetenleim ansammeln und so daß äußere Bild der Tapete beeinträchtigen.

Auf diese sehr rauhe Oberfläche der Wand 30 wird zuerst eine Bahn Putztapete 100 aufgelegt. Von großem Vorteil ist dabei, daß auf die aus dem Malerhandwerk bekannten Arbeitsmittel und Klebetechniken zurückgegriffen werden kann. Die Putztapete wird also der Raumhöhe entsprechend von der Rolle auf Länge geschnitten. Die Flachseite 24 bzw. die auf ihr befindliche Mörtelschicht 1' wird mit einem verdünnten Dispersionskleber versehen. Die Bahn wird dann wie eine herkömmliche Tapete auf die Wand aufgeklebt. Dadurch, daß die Flachseite 24 bzw. biegeelastische Mörtelschicht 1' eine fast glatte, rauhe Oberfläche haben, bieten sie dem Kleber eine Oberfläche, die die Haftung verbessert.

Mit Hilfe einer Bürste wird die Putztapete glattgestrichen und gleichmäßig auf die Wand 30 gedrückt. Anschließend wird als zweite Bahn die Putztapete 101 in gleicher Art und Weise zugeschnitten, auf der Rückseite mit Klebstoff versehen und an die Wand geklebt. Die Putztapete 100, 101 wird dabei wie eine Rauhfasertapete auf Stoß geklebt, so daß nach dem Austrocknen des Klebstoffes die mit der Putztapete tapezierte Raum ein ebenes Äußeres hat. In die Mörtelschicht 1 eingebrachte Strukturen können zum optischen Nichterkennen des Stoßes zwischen den Bahnen 100, 101' beitragen. Je nach Einsatzfall kann die nach außen zeigende Mörtelschicht 1 gestrichen werden. Der eingefärbte Kunstharzmörtel 11 erleichtert dabei den Farbanstrich.

Die Mörtelschicht ist hitzebeständig, so daß die Putztapete auch als Flächenwärmeelement verwendet werden kann. Dazu ist in die biegeelastische Mörtelschicht 1 ein Heizdraht-Geflecht eingebracht, welches bei Anlegen einer Stromquelle eine gleichmäßige Erwärmung des Raums ermöglicht. Gekoppelt mit einer Fußbodenbeheizung, die in herkömmlicher Ausführungsform hergestellt ist, lassen sich so Räume temperieren, die geringe Temperaturgradienten aufweisen sollen. Solche Räume sind Operationsräume, Laborräume, Boxen für die Aufzucht von Kleintieren, wie Kücken oder Ferkel. Diese Räume verlangen außer einer sehr gleichmäßigen Temperierung auch abwaschbare Flächen. Die verarbeitungsfreundliche Oberfläche der biegeelastischen Mörtelschicht 1 gestattet ein einfaches Befliesen oder Beschichten mit einer anderen abwaschbaren Oberfläche.

Das eingebrachte Gitter aus Heizungsdrähten übernimmt nicht nur die Funktion einer gleichmäßigen Beheizung des Raumes, sondern gewährleistet darüber hinaus eine Abschirmung gegenüber elektromagnetischen Wellen (Faraday'scher Käfig). Das Tapezieren von Laborräumen bis hin zu Höchstspannungs-Prüfhallen mit einer derartigen Tapete ermöglicht damit störungsfreie Messungen. Wesentlich ist, daß das in die biegeelastische Mörtelschicht eingebrachte Drahtgitter mit einem festen Gittermaß, bei dem die Feinmaschigkeit 10 x 10 mm bis 20 x 20 mm betragen kann, ein teures Auskleiden mit speziell gesickten Blechplatten oder eines aufwendigen Unterputz-Verlegens von Streckmetall ersetzt. Erreicht wird dabei neben dem Abschirmeffekt ein hoher Wärmeisoliereffekt, die bei derartigen Räumen darüber hinaus zur Einsparung von Heizungskosten beiträgt.

Putztapeten mit Heizungsdrähten können auch in Saunen und saunaähnlichen Räumen eingesetzt werden. Die Heizdrähte sorgen für eine gleichmäßige und hohe Temperatur. Der Anteil der Vliesbahn 2 in der Putztapete isoliert nicht nur, sondern ist ebenso wie die Mörtelschicht in der Lage, ständig ohne Änderung des Materialzustandes den herrschenden hohen Temperaturen standzuhalten.

## Patentansprüche

1. Bahnförmiges Halbzeug, insbesondere Putztapete, das aufweist
ein flächenförmiges und wenigstens teilweise flexibles Trägermaterial (2) und
eine flexible Schicht (1, 3) aus einer abgebundenen Beschichtungsmasse (11), die auf wenigstens einer Flachseite (21, 24) des Trägermaterials (2) angeordnet ist,
wobei,
- das Trägermaterial als eine Vliesbahn (2) aus einem Glasfaservlies eine Dicke (D)
zwischen 0,05 mm und 3 mm hat,
- die Schicht (1, 3) aus einem abgebundenen, mineralgefüllten, flexiblen Kunststoff besteht und im nichtabgebundenen Zustand als mineralgefüllte Kunstsoffdispersion (11) folgende Zusammensetzung hat:
a) 40 bis 95 Gew.-% mineralische Stoffe und
b) 5 bis 60 Gew.-% Kunststoffdispersion, letztere enthaltend eine Flüssigkeitskomponente mit maximal 60 Gew.-% Wasser oder eine andere geeignete Flüssigkeit und
- die Flüssigkeitskomponente wenigstens folgende Komponenten enthält:
- 10 bis 45 Gew.-%, bezogen auf die Kunsstoffdispersion, einer oder mehrerer Elastizierkomponenten, welche vorzugsweise eine Dispersion mit 80 bis 90 Gew.-% eines Copolymers aus Butylacrylat und Styrol in Wasser ist,
vermischt mit 0,5 bis 2 % Paraffindispersion mit einem Paraffinanteil von 20 bis 50 Gew.-%, in Wasser
und
- 1 bis 15 Gew.-% Wasser.

2. Halbzeug nach Anspruch 1, **dadurch gekennzeichnet, daß** die Vliesbahn (2) aus dem Glasvlies
- eine Flächengewicht zwischen 40 und 120 g/m²,
- einer Dicke zwischen 0,3 und 1,2 mm,
- einem Faserdurchmesser zwischen 5 und 20 µm und
- einee Luftdurchlässigkeit zwischen 500 l/m²•sec und 4500 l/ m²•sec hat.

3. Halbzeug nach Anspruch 1 oder 2, **dadurch gekennzeichnet, daß** die mineralgefüllte Kunstsoffdispersion ein Kunstharz-Mörtel (11) ist, der im nichtabgebundenen Zustand folgende Zusammensetzung hat:
- 50 bis 90 Gew.-% Pulverkomponente aus Zement und feinstkörnigen Zuschlagstoffen und
- 10 bis 50 Gew.-% Flüssigkeitskomponente mit elastizierenden Eigenschaften,
wobei der Mörtel (11) im ausgehärteten Zustand auf einer der Flachseiten (21, 24) als mineralgefüllte Weichkunststoffschicht wenigstens eine flexible Mörtelschicht (1,1') und in den Luftdurchlässigkeitsausnehmungen (23) eine Mörteltränkschicht (3) ist.

4. Halbzeug nach Anspruch 3, **dadurch gekennzeichnet, daß** die Pulverkomponente des Kunstharz-Mörtels (11) sich wie folgt zusammensetzt:
| Volumenteile | Komponente(in Vol.-%) |
|---|---|
| 40 - 95 | hydraulisches Bindemittel, |
| 0 - 50 | latent hydraulisches Bindemittel, |
| 0 - 20 | Füllstoff, |
| 0,1 - 5 | Hydrophobiermittel, |
| 0 - 10 | Silicat, |
| 0 - 10 | Dispersionspulver, |
| 0 - 5 | Verflüssiger, |
| 0 - 3 | Stabilisator. |

5. Halbzeug nach einem der Ansprüche 3 oder 4, **dadurch gekennzeichnet, daß** der Pulverkomponente des Kunstharz-Mörtels (11) hinzugefügt ist:
| Volumenteile (in Vol. -%) | Komponente |
|---|---|
| 0 - 5 | Reaktionsverzögerer, |
| 0 - 5 | Abbindebeschleuniger, |
| 0 - 3 | Verdickungsmittel, |
| 0 - 5 | Schaumbinder. |

6. Halbzeug nach einem der Ansprüche 3 bis 5, **dadurch gekennzeichnet, daß** in einer der Mörtelschichten (1, 1') ein Armierungsgewebe eingebettet ist.

7. Halbzeug nach einem der Ansprüche 3 bis 6, **dadurch gekennzeichnet, daß** in oder auf einer der Mörtelschichten (1, 1') Wärmeübertragungsträger angeordnet sind.

8. Verfahren zur Herstellung eines Halbzeugs, insbesondere einer Putztapete, gemäß Anspruch 1,
mit folgenden Schritten
A) Führen des flächenförmigen und wenigstens teilweise flexiblen Glasfaservlieses (2) mit einer Vortriebsgeschwindigkeit (v) zwischen 1 und 15 m/min über eine umlaufende Flächeneinrichtung (48),
B) Aufbringen der mineralgefüllten Kunststoffdispersion (11) auf eine der Flachseiten des Vlieses (2) aus einem Misch- und Vorratsbehälter (52) mit einem Ausbreitungsmaß (A) zwischen 100 und 350 mm,
C) Abstreifen der mineralgefüllten Kunststoffdispersion (11) mit einer Abstreifeinrichtung (53) zu einer Schicht (1),
D) Führen des wenigstens einseitig beschichteten Vlieses (2) mit der Vorlaufgeschwindigkeit (v) zwischen 1 und 15 m/min über eine luftdurchlässige Stabtransportkette (58) durch eine Trocknungszone (62) und Abbinden der mineralgefüllten Kunststoffdispersion (11),
E) Speichern des fertiggestellten bahnförmigen Halbzeuges (100, 101) mit einer Speichereinrichtung (65).

9. Verfahren nach Anspruch 8, **dadurch gekennzeichnet, daß** im Schritt B) das Ausbreitungsmaß (A) überwacht und durch Mengenregulierung einer Flüssigkeitskomponente in den Mischund Vorratsbehälter (52) das Ausbreitungsmaß (A) zwischen 100 und 300 mm eingestellt wird.

10. Verfahren nach Anspruch 8 oder 9, **dadurch gekennzeichnet, daß** im Schritt B) der mineralgefüllten Kunststoffdispersion (11) ein Farbstoff zugesetzt wird.

11. Verfahren nach einem der Ansprüche 8 bis 10, **dadurch gekennzeichnet, daß** im Schritt C) ein vor der Abstreifeinheit (53) aufgestauter Mineral-Kunststoffdispersions-Schwall (13) mit einem Sensor abgefühlt und in Abhängigkeit von dessen Höhe die Zufuhr der mineralgefüllten Polymerdispersion (11) aus dem Misch- und Vorratsbehälter (52) eingestellt wird.

12. Verfahren nach einem der Ansprüche 8 bis 11, **dadurch gekennzeichnet, daß** nach dem Schritt C) und vor dem Schritt B) die noch feuchte Schicht (1) mit einer Struktureinrichtung (54) zu einer Strukturschicht (12) umgestaltet wird.

13. Verfahren nach einem der Ansprüche 8 bis 12, **dadurch gekennzeichnet, daß** im Schritt D) die mineralgefüllte Kunststoffdispersion (11) wenigstens der Strukturschicht (12) durch ein Bestrahlen mit Infrarotstrahlen gebunden wird.

14. Verfahren nach einem der Ansprüche 8 bis 13, **dadurch gekennzeichnet, daß** im Schritt D) der Bindungsprozeß der mineralgefüllten Kunststoffdispersion (11) durch ein Bespülen mit Unterluft vorgenommen wird.

15. Verfahren nach einem der Ansprüche 8 bis 14, **dadurch gekennzeichnet, daß** durch die Infrarotstrahlen die Strukturschicht (12) bestrahlt und durch die Unterluft wenigstens die der Strukturschicht (12) gegenüberliegende Flachseite (24) des Trägermaterials bespült wird.

16. Verfahren nach einem der Ansprüche 10 bis 15, **dadurch gekennzeichnet, daß** Verfahrensschritt E) das bahnförmige Halbzeug (100, 101) aufgerollt oder nach einem Schneiden auf Länge gestapelt wird.

17. Verfahren nach einem der Ansprüche 9 bis 16, **dadurch gekennzeichnet, daß** wenigstens durch das Aufrollen des bahnförmigen Halbzeugs (100, 101) das Vlies (2) und das wenigstens einseitig beschichtete Vlies (2) geführt und deren Vorlaufgeschwindigkeit (v) eingestellt wird.

## Claims

1. A semifinished product in the form of a web, particularly an ornamental wall hanging, comprising a flat, at least partly flexible substrate material (2) and a flexible layer (1, 3) of hardened coating material (11) disposed on at least one flat side (21, 24) of the substrate material (2), wherein
- the substrate material is a nonwoven glass fibre web (2) having a thickness (D) between 0.05 mm and 3 mm,
- the layer (1, 3) consists of a hardened mineral-filled flexible plastic and in the non-hardened state is in the form of a mineral-filled plastic dispersion (11) having the following composition:
a) 40 to 95 wt.% mineral substances and
b) 5 to 60 wt.% plastic dispersion, the latter containing a liquid component comprising up to 60 wt.% water or another suitable liquid and
- the liquid component contains at least the following components:
- 10 to 45 wt.%, relative to the plastic dispersion, of one or more elasticising components, preferably in the form of a dispersion containing 80 to 90 wt.% of a butyl acrylate and styrene copolymer in water,
mixed with 0.5 to 2% paraffin dispersion with a paraffin component of 20 to 50 wt.% in water and
- 1 to 15 wt.% water.

2. A semifinished product according to claim 1, **characterised in that** the non-woven glass web (2) has
- a weight per unit area between 40 and 120 g/m²,
- a thickness between 0.3 and 1.2 mm,
- a fibre diameter between 5 and 20 µm and
- an air permeability between 500 l/m².sec and 4500 l/m².sec.

3. A semifinished product according to claim 1 or 2, **characterised in that** the mineral-filled plastic dispersion is a synthetic resin mortar (11) which in the non-hardened state has the following composition:
- 50 to 90 wt.% powder component consisting of cement and very fine-grain aggregate and
- 10 to 50 wt.% liquid component having elasticising properties,
wherein the mortar (11) in the hardened state on one of the flat sides (21, 24) is in the form of a mineral-filled soft plastic layer comprising at least one flexible mortar layer (1, 1') and an impregnating mortar layer (3) in the recesses (23) permeable to air.

4. A semifinished product according to claim 3, **characterised in that** the powder component of the synthetic resin mortar (11) is made up as follows:
| Parts by volume | Component (in vol.%) |
|---|---|
| 40 - 95 | Hydraulic binder |
| 0 - 50 | Latent hydraulic binder |
| 0 - 20 | Filler |
| 0.1 - 5 | Waterproofing agent |
| 0 - 10 | Silicate |
| 0 - 10 | Dispersion powder |
| 0 - 50 | Liquefier |
| 0 - 3 | Stabiliser. |

5. A semifinished product according to claim 3 or 4, **characterised in that** the following is added to the powder component of the synthetic resin mortar (11) :
| Parts by volume (in vol.%) | Component |
|---|---|
| 0 - 5 | Reaction retarder |
| 0 - 5 | Hardening accelerator |
| 0 - 3 | Thickener |
| 0 - 5 | Foam binder. |

6. A semifinished product according to any of claims 3 to 5, **characterised in that** a reinforcing fabric is embedded in one of the mortar layers (1, 1').

7. A semifinished product according to any of claims 3 to 6, **characterised in that** heat transfer carriers are disposed in or on one of the mortar layers (1, 1').

8. A method of producing a semifinished product, particularly an ornamental hanging, according to claim 1 in the following steps:
A) conveying the flat, at least partly flexible glass fibre nonwoven (2) at a speed (v) of advance between 1 and 15 m/min over a rotating flat device (28),
B) applying the mineral-filled plastic dispersion (11) to one of the flat sides of the nonwoven (2) from a mixing and storage container (52) and with a spread coefficient (A) between 100 and 350 mm,
C) wiping off the mineral-filled plastic dispersion (11) with a wiping device (53), to form a layer (1),
D) conveying the nonwoven (2), coated on at least one side, at the advance speed (v) of between 1 and 15 m/min over an air-permeable bar conveyor chain (58) through a drying zone (62) and hardening the mineral-filled plastic dispersion (11), and
E) storing the final semifinished web (100, 101) in a storage device (65).

9. A method according to claim 8, **characterised in that** in step B) the spread coefficient (A) is monitored and adjusted to between 100 and 300 mm by controlling the amount of a liquid component in the mixing and storage container (52).

10. A method according to claim 8 or 9, **characterised in that** in step B) a dye is added to the mineral-filled plastic dispersion (11).

11. A method according to any of claims 8 to 10, **characterised in that** in step C) an accumulation of mineral and plastic dispersion (13) formed in front of the wiping unit (53) is scanned by a sensor and the supply of mineral-filled polymer dispersion (11) from the mixing and storage container (52) is adjusted in dependence on the height of the accumulation.

12. A method according to any one of claims 8 to 11, **characterised in that** after step C) and before step B) the still-damp layer (1) is converted into a structured layer (12) by a structuring device (54).

13. A method according to any of claims 8 to 12, **characterised in that** in step D) the mineral-filled plastic dispersion (11) at least of the structured layer (12) is bonded by infrared radiation.

14. A method according to any of claims 8 to 13, **characterised in that** in step B) the mineral-filled plastic dispersion (11) is bonded by flushing with air from underneath.

15. A method according to any of claims 8 to 14, **characterised in that** the structured layer (12) is irradiated with infrared rays and at least the flat side (24) of the substrate material opposite the structured layer (12) is flushed with air from underneath.

16. A method according to any of claims 10 to 15, **characterised in that** in step E) the semifinished web (100, 101) is rolled up or cut to length and stacked.

17. A method according to any of claims 9 to 16, **characterised in that** the nonwoven (2) and the said nonwoven (2) coated on at least one side are guided and their speed of advance (v) is adjusted at least by rolling up the semifinished web (100, 101).

## Revendications

1. Produit semi-fini, en particulier revêtement de crépi, en forme de bande qui inclut une matière porteuse (2) de forme plate et au moins partiellement flexible et
une couche flexible (1, 3) formée d'une masse prise de revêtement (11) qui est agencée sur au moins un côté plat (21, 24) de la matière porteuse (2), dans lequel
- la matière porteuse consiste en une bande de non-tissé (2) en non-tissé de fibres de verre d'une épaisseur (D) comprise entre 0,05 et 3 mm;
- la couche (1, 3) se compose d'une matière plastique flexible prise, chargée en matières minérales, et possède la composition suivante dans son état avant prise où elle consiste en une dispersion (11) de matière plastique chargée en matières minérales:
a) 40 à 95% en poids de matières minérales et
b) 5 à 60% de dispersion de matière plastique, cette dernière contenant un composant liquide contenant de l'eau à une teneur maximale de 60% en poids et un autre liquide approprié et
- le composant liquide contient au moins les composants suivants:
- 10 à 45% en poids, rapporté à la dispersion de matière plastique, d'un ou plusieurs agents élastifiants, qui consistent de préférence en une dispersion à 80 à 90% en poids d'un copolymère d'acrylate de butyle et de styrène dans l'eau,
mélangé avec 0,5 à 2% de dispersion de paraffine dans l'eau à teneur en paraffine de 20 à 25% en poids, et
- 1 à 15% en poids d'eau.

2. Produit semi-fini selon la revendication 1, **caractérisé en ce que** la bande de non-tissé (2) en non-tissé de verre possède les propriétés suivantes:
- un grammage compris entre 40 et 120 g/m²,
- une épaisseur comprise entre 0,3 et 1,2 mm,
- un diamètre de fibre compris entre 5 et 20 µm,
- une perméabilité à l'air comprise entre 500 l/m²•sec et 4500 l/m²•sec.

3. Produit semi-fini selon la revendication 1 ou 2, **caractérisé en ce que** la dispersion de matières plastiques chargée en matières minérales est un mortier (11) de résine synthétique dont la composition dans l'état après prise est :
- 50 à 90% en poids de composants pulvérulents de ciment et d'additifs à grains fins et
- 10 à 50% en poids de composants liquides à propriétés élastifiantes,
dans lequel le mortier (11) à l'état durci est, au moins sur l'un des côtés plats (21, 24), une couche de mortier flexible (1, 1') qui consiste en une couche de matière plastique souple chargée en matières minérales, et est une couche (3) imprégnée de mortier dans les évidements (23) de perméabilité à l'air.

4. Produit semi-fini selon la revendication 3, **caractérisé en ce que** la composition du composant pulvérulent du mortier (11) de résine synthétique est la suivante:
| Fraction volumique | Composant (% en volume) |
|---|---|
| 40 à 95 | Liant hydraulique |
| 0 à 50 | Liant hydraulique latent |
| 0 à 20 | Matière de charge |
| 0,1 à 5 | Agent hydrophobe |
| 0 à 10 | Silicate |
| 0 à 10 | Poudre de dispersion |
| 0 à 5 | Fluidifiant |
| 0 à 3 | Stabilisant |

5. Produit semi-fini selon la revendication 3 ou 4, **caractérisé par** les additifs suivants au composant pulvérulent du mortier de résine synthétique:
| Fraction volumique (% en volume) | Composant |
|---|---|
| 0 à 5 | Ralentisseur de réaction |
| 0 à 5 | Accélérateur de prise |
| 0 à 3 | Agent solidifiant |
| 0 à 5 | Liant de moussage |

6. Produit semi-fini selon l'une quelconque des revendications 3 à 5, **caractérisé en ce qu'**un tissu d'armature est incorporé dans l'une des couches de mortier (1, 1').

7. Produit semi-fini selon l'une quelconque des revendications 3 à 6, **caractérisé en ce que** des supports de transfert thermique sont agencés dans ou sur l'une des couches de mortier (1, 1').

8. Procédé de fabrication d'un produit semi-fini, en particulier un revêtement de crépi selon la revendication 1, **caractérisé en ce qu'**il comprend les étapes consistant à:
A) guider au-dessus d'un dispositif plat en rotation (48) le non-tissé plat et au moins partiellement flexible (2) de fibre de verre à une vitesse d'entraînement (v) comprise entre 1 et 15 m/min;
B) appliquer sur l'un des côtés plats du non-tissé (2) la dispersion de matière plastique (11) chargée en matières minérales provenant d'un récipient de mélange et de réserve (52) dont la dimension d'expansion (A) est comprise entre 100 et 350 mm,
C) racler à l'aide d'un dispositif de raclage (53) la dispersion de matière plastique (11) chargée en matières minérales pour former une couche (1),
D) guider au moyen d'une chaîne de transport (58) à barreaux perméable à l'air le non-tissé (2) revêtu au moins sur l'un de ses cotés à la vitesse d'avance (v) comprise entre 1 et 15 m/min à travers une zone de séchage (62) et faire prendre la dispersion de matière plastique (11) chargée en matières minérales,
E) stocker le produit semi-fini terminé en forme de bande (100, 101) au moyen d'un dispositif de stockage (65).

9. Procédé selon la revendication 8, **caractérisé en ce que**, à l'étape B), la dimension d'expansion (A) est surveillée et la dimension d'expansion (A) est réglée entre 100 et 300 mm par régulation de débit d'un composant liquide dans le réservoir (52) de mélange et de réserve.

10. Procédé selon la revendication 8 ou 9, **caractérisé en ce qu'**un colorant est ajouté, à l'étape B), à la dispersion (11) de matière plastique chargée en matières minérales.

11. Procédé selon l'une quelconque des revendications 8 à 10, **caractérisé en ce qu'**un flux (13) de dispersion de matière plastique et de matières minérales accumulées devant l'unité de raclage (53) est détecté par un capteur à l'étape C), et l'alimentation en dispersion (11) de polymère chargée en matières minérales à partir du réservoir (52) de mélange et de réserve est alors réglée en fonction de la hauteur de ce flux.

12. Procédé selon l'une quelconque des revendications 8 à 11, **caractérisé en ce que** la couche encore humide (1) est transformée en une couche structurée (12) après l'étape C) et avant l'étape D), au moyen d'un dispositif (54) de structure.

13. Procédé selon l'une quelconque des revendications 8 à 12, **caractérisé en ce que** la prise de la dispersion de matière plastique- (11) chargée en matières minérales et au moins de la couche de structure (12) est effectuée à l'étape D) par exposition à un rayonnement infrarouge.

14. Procédé selon l'une quelconque des revendications 8 à 13, **caractérisé en ce que** le processus de prise de la dispersion de matière plastique (11) chargée en matières minérales est exécutée à l'étape D) au moyen d'un balayage d'air provenant du dessous.

15. Procédé selon l'une quelconque des revendications 8 à 14, **caractérisé en ce que** la couche de structure (12) est exposée au rayonnement infrarouge et qu'au moins le côté plat (24) de la matière porteuse opposé à la couche de structure (12) est balayé par l'air provenant du dessous.

16. Procédé selon l'une quelconque des revendications 10 à 15, **caractérisé en ce que** le produit semi-fini en forme de bande est déroulé à l'étape E) du procédé, et est alors empilé après avoir été découpé en longueurs.

17. Procédé selon l'une quelconque des revendications 9 à 16, **caractérisé en ce que** le déroulement du produit semi-fini (100, 101) en forme de bande guide la matière non-tissée (2) et la matière non-tissée (2) revêtue au moins sur l'un de ses côtés et règle sa vitesse d'avance (v).
